# EUROPEAN PATENT APPLICATION

(11) **EP 1 860 124 A1**
(43) Date of publication of application: **28.11.2007**
(21) Application number: 06729195.5
(22) Date of filing: 15.03.2006
(51) Int. Cl.: C08F 8/04, C08F 297/04

(54) **HYDROGENATED AROMATIC VINYL COPOLYMER AND MOLDED ARTICLE PRODUCED FROM THE SAME**

(30) Priority: 17.03.2005 JP 2005077843
(71) Applicant: JSR Corporation, Tokyo 104-8410 (JP)
(72) Inventor: KAWATA, Takashi, Tokyo 1048410 (JP)
(74) Representative: TBK-Patent
(86) International application number: PCT/JP2006/305174
(87) International publication number: WO 2006/098388

(57) **Abstract**

A hydrogenated aromatic vinyl copolymer obtained by hydrogenating a block copolymer comprising monomer units including an aromatic vinyl monomer and a conjugated diene monomer, wherein the block copolymer includes (A) 75 to 92% by mass of a constituent unit derived from the aromatic vinyl monomer and (B) 8 to 25% by mass of a constituent unit derived from the conjugated diene monomer (with the proviso that (A) + (B) =100% by mass) and is a branched block copolymer with a specific block structure which has a weight average molecular weight of 100,000 to 300,000, and 97% or more of the aromatic rings derived from the aromatic vinyl monomer and the double bonds derived from the conjugated diene monomer are hydrogenated. The hydrogenated aromatic vinyl copolymer has excellent transparency, excellent impact resistance, low water absorption, and a small birefringence index.

## Description

### TECHNICAL FEELD

The present invention relates to a hydrogenated aromatic vinyl copolymer and a molded article produced therefrom. More particularly, the present invention relates a hydrogenated aromatic vinyl copolymer having excellent transparency, excellent impact resistance, low water absorption, and a small birefringence index, and a molded article produced therefrom.

### BACKGROUND ART

Various resin materials have been used as materials for forming optical parts used in various fields. Also, resin compositions (resin materials) including materials and components of various structures have been developed in order to obtain properties applicable to each of these fields.

Specifically, a vinylcyclohexane polymer obtained by hydrogenating an aromatic vinyl polymer has been disclosed as a material for forming an optical disk substrate (for example, refer to Patent Document 1). Patent Document 1 discloses that this vinylcyclohexane polymer has high light transmittance, low water absorption, and a small birefringence index. On the other hand, a hydrogenated polymer has been disclosed which is obtained by hydrogenating an aromatic vinyl polymer and has a specific molecular weight and a degree of hydrogenation of the aromatic ring of 97% or more (for example, refer to Patent Document 2). Patent Document 2 discloses that this hydrogenated polymer has a small birefringence, excellent mechanical strength, and excellent moisture resistance.

Also, a hydrogenated styrene copolymer obtained by hydrogenating a styrene copolymer obtained by copolymerizing specific monomers has been disclosed (for example, refer to Patent Document 3). Patent Document 3 describes that this hydrogenated styrene copolymer has excellent heat resistance, excellent transparency, and a small water absorption. Furthermore, hydrogenated styrene/conjugated diene copolymers obtained by hydrogenating a styrene/conjugated diene copolymer having a specific block structure or a specific molecular weight have been disclosed (for example, refer to Patent Documents 4 to 6). Patent Documents 4 to 6 disclose that these hydrogenated styrene/conjugated diene copolymers have excellent transparency, heat resistance, rigidity, and the like.

By the way, it is necessary that these types of resin materials used for forming optical parts exhibit high transparency and low water absorption as well as excellent impact resistance in the processing steps and at the time of use. That is, it is known that if the resin material is highly brittle, defects and damages easily occur during molding and molded articles are easily damaged when knocked. Accordingly, resin materials for forming optical parts are required to have excellent transparency, low water absorption, and excellent impact resistance. However, the resin materials disclosed in Patent Documents 1 to 6 do not necessarily have sufficient impact resistance and further improvement is needed.
Patent Document 1: JP-B-7-114030
Patent Document 2: JP-A-2000-169521
Patent Document 3: JP-A-2002-201213
Patent Document 4: JP-A-2002-327010
Patent Document 5: JP-A-2003-2938
Patent Document 6: JP-A-2003-252941

### DISCLOSURE OF THE INVENTION

The present invention has been achieved in view of the problem in the related art. An object of the present invention is to provide a hydrogenated aromatic vinyl copolymer having excellent transparency, excellent impact resistance, low water absorption, and a small birefringence index, and to provide a molded article having excellent transparency, excellent impact resistance, low water absorption, and a small birefringence index.

As a result of extensive research by the inventors in order to accomplish the above object, the inventors have found that it is possible to accomplish the above object by hydrogenating a branched block copolymer which has an aromatic vinyl monomer unit and a conjugated diene monomer unit in given proportions and which has a specific block structure, thus leading to accomplishment of the present invention.

That is, according to the present invention, the following hydrogenated aromatic vinyl copolymer and a molded article using the same are provided.

[1] A hydrogenated aromatic vinyl copolymer obtained by hydrogenating a block copolymer comprising monomer units including an aromatic vinyl monomer and a conjugated diene monomer, wherein the block copolymer includes (A) 75 to 92% by mass of a constituent unit derived from the aromatic vinyl monomer and (B) 8 to 25% by mass of a constituent unit derived from the conjugated diene monomer (with the proviso that (A) + (B) = 100% by mass) and is a branched block copolymer which has a weight average molecular weight of 100,000 to 300,000 and of which the block structure is shown by the following general formula (1) or (2),

(A-B)ₙM (1)

(A-B-A)ₙM (2)

wherein A is the constituent unit derived from the aromatic vinyl monomer, B is the constituent unit derived from the conjugated diene monomer, M is at least one metallic element selected from the group consisting of Si, Sn, and Ge, and n is 2<n<4, and 97% or more of the aromatic rings derived from the aromatic vinyl monomer and the double bonds derived from the conjugated diene polymer are hydrogenated.

[2] The hydrogenated aromatic vinyl copolymer according to [1], wherein the hydrogenated aromatic vinyl copolymer is hydrogenated by a hydrogenation process comprising a first hydrogenation step carried out under the conditions of a reaction temperature of 130 to 150°C, a hydrogen pressure of 3 to 7 MPa, and a reaction time of 1 to 5 hours and a second hydrogenation step carried out under the conditions of a reaction temperature of 200 to 250°C, a hydrogen pressure of 9 to 15 MPa, and a reaction time of 1 to 24 hours.

[3] The hydrogenated aromatic vinyl copolymer according to [1] or [2], wherein the hydrogenated aromatic vinyl copolymer has a glass transition temperature of 135°C or more, a weight average molecular weight of 50,000 or more, and a light transmittance of 750 nm light at a thickness of 25 mm of 88% or more.

[4] The hydrogenated aromatic vinyl copolymer according to any one of [1] to [3], wherein n in the general formulas (1) and (2) is 2.3≤n≤3.7.

[5] The hydrogenated aromatic vinyl copolymer according to any one of [1] to [4], wherein the aromatic vinyl monomer is styrene.

[6] The hydrogenated aromatic vinyl copolymer according to any one of [1] to [5], wherein the conjugated diene monomer is 1,3-butadiene.

[7] A molded article produced by molding the hydrogenated aromatic vinyl copolymer according to any one of [1] to [6].

The hydrogenated aromatic vinyl copolymer of the present invention exhibits the effect of having excellent transparency, excellent impact resistance, low water absorption, and a small birefringence index.

Also, the molded article of the present invention exhibits the effect of having excellent transparency, excellent impact resistance, low water absorption, and a small birefringence index.

### BRIEF DESCRIPTION OF THE DRAWINGS

Figure 1 is an infrared absorption spectrum of the hydrogenated aromatic vinyl copolymer in Example 2.
Figure 2 is a ¹H-NMR chart of the hydrogenated aromatic vinyl copolymer in Example 2.

### BEST MODE FOR CARRYING OUT THE INVENTION

The preferred embodiments for carrying out the present invention are described below. However, the present invention is not restricted to the following embodiments and it should be construed that there are also included, in the present invention, those embodiments in which appropriate changes, improvements, etc. have been made to the following embodiments based on the ordinary knowledge possessed by those skilled in the art, as long as there is no deviation from the gist of the present invention.

### 1. Hydrogenated aromatic vinyl copolymer

One embodiment of a hydrogenated aromatic vinyl copolymer of the present invention is a hydrogenated aromatic vinyl copolymer obtained by hydrogenating a block copolymer comprising monomer units including an aromatic vinyl monomer and a conjugated diene monomer, wherein the block copolymer (copolymer before hydrogenation) includes (A) 75 to 92% by mass of a constituent unit derived from the aromatic vinyl monomer and (B) 8 to 25% by mass of a constituent unit derived from the conjugated diene monomer (with the proviso that (A) + (B) = 100% by mass) and is a branched block copolymer which has a weight average molecular weight of 100,000 to 300,000 and of which the block structure is shown by the following general formula (1) or (2),

(A-B)ₙM (1)

(A-B-A)ₙM (2)

wherein A is the constituent unit derived from the aromatic vinyl monomer, B is the constituent unit derived from the conjugated diene monomer, M is at least one metallic element selected from the group consisting of Si, Sn, and Ge, and n is 2<n<4, and 97% or more of the aromatic rings derived from the aromatic vinyl monomer and the double bonds derived from the conjugated diene monomer are hydrogenated.

### (1) Block copolymer (copolymer before hydrogenation)

The block copolymer which is the copolymer before hydrogenation of the hydrogenated aromatic vinyl copolymer of the present embodiment comprises monomer units including an aromatic vinyl monomer and a conjugated diene monomer. This block copolymer, when the total of the constituent units derived from the aromatic vinyl monomer and of the constituent units derived from the conjugated diene monomer is 100% by mass, includes 75 to 92% by mass, preferably 80 to 90% by mass, and further preferably 82 to 88% by mass of the constituent units derived from the aromatic vinyl monomer. When the proportion of the constituent units derived from the aromatic vinyl monomer is below 75% by mass, the total light transmittance of the hydrogenated aromatic vinyl copolymer obtained using this block copolymer decreases and it is difficult to ensure sufficient transparency as a material for optical parts. On the other hand, when the proportion of the constituent units derived from the aromatic vinyl monomer exceeds 92% by mass, the impact resistance of the obtained hydrogenated aromatic vinyl copolymer decreases.

The block copolymer which is the copolymer before hydrogenation, when the total of the constituent units derived from the aromatic vinyl monomer and of the constituent units derived from the conjugated diene monomer is 100% by mass, includes 8 to 25% by mass, preferably 10 to 20% by mass, and further preferably 12 to 18% by mass of the constituent units derived from the conjugated diene monomer.
When the proportion of the constituent units derived from the conjugated diene monomer is below 8% by mass, the impact resistance of the obtained hydrogenated aromatic vinyl copolymer decreases. On the other hand, when the proportion of the constituent units derived from the conjugated diene monomer exceeds 25% by mass, the total light transmittance of the hydrogenated aromatic vinyl copolymer obtained using this block copolymer decreases and it is difficult to ensure sufficient transparency as a material for optical parts.

The block copolymer which is the copolymer before hydrogenation has a block structure shown by the above formula (1) or (2). The origin of the hydrogenated aromatic vinyl copolymer of the present embodiment, that is, hydrogenation of a block copolymer having a block structure shown by these general formulas, ensures excellent impact resistance and fluidity. With respect to the two "A"s in the formula (2), the molecular weights, the types of constituting aromatic vinyl monomers, and the like thereof may be the same or different.

The weight average molecular weight of the block copolymer, which is the copolymer before hydrogenation, is 100,000 to 300,000, preferably 110,000 to 250,000, and further preferably 120,000 to 200,000. When the weight average molecular weight of the block copolymer is below 100,000, the impact resistance of the obtained hydrogenated aromatic vinyl copolymer decreases. In contrast, when the weight average molecular weight of the block copolymer exceeds 300,000, the fluidity of the hydrogenated aromatic vinyl copolymer decreases and the hydrogenated aromatic vinyl copolymer becomes difficult to handle.

The range of "n" in the formulas (1) and (2) representing the block structure of the block copolymer which is the copolymer before hydrogenation is 2<n<4, preferably 2.3≤n≤3.7, and further preferably 2.5≤n≤3.5. That is, the block copolymer, which is the copolymer before hydrogenation of the hydrogenated aromatic vinyl copolymer of the present embodiment, is so-called a branched block copolymer which has a branched chain centered on a coupling agent residue. Here, when the range of "n" in the formulas (1) and (2) is n≤2, the impact resistance of the obtained hydrogenated aromatic vinyl copolymer decreases. In contrast, it is difficult to make the range of "n" n≥4.

The content of vinyl bonds (1,2- and 3,4- bonds) of the block copolymer which is the copolymer before hydrogenation is preferably 10% or more, further preferably 20% or more, and particularly preferably 30% or more. 30 to 90% is more preferable. The content of vinyl bonds in these ranges ensures further improvement of the impact resistance of the obtained hydrogenated aromatic vinyl copolymer.

### (2) Aromatic vinyl monomer

As examples of the aromatic vinyl monomer constituting the block copolymer which is the copolymer before hydrogenation of the hydrogenated aromatic vinyl copolymer of the present embodiment, styrene; α-methylstyrene; α-ethylstyrene; α-propylstyrene; α-isopropylstyrene; α-t-butylstyrene; 2-methylstyrene; 3-methylstyrene; 4-methylstyrene; 2,4-dimethylstyrene; 2,4-diisopropylstyrene; 4-t-butylstyrene; and 5-t-butyl-2-methylstyrene can be given. Among these, as the monomers that can be industrially utilized and can produce a hydrogenated aromatic vinyl copolymer having excellent properties, styrene; α-methylstyrene; α-ethylstyrene; α-propylstyrene; α-isopropylstyrene; α-t-butylstyrene; 2-methylstyrene; 3-methylstyrene; 4-methylstyrene; 2,4-dimethylstyrene; or 2,4-diisopropylstyrene is preferable, styrene, α-methylstyrene; α-ethylstyrene; α-propylstyrene; α-isopropylstyrene; α-t-butylstyrene; 2-methylstyrene; 3-methylstyrene; or 4-methylstyrene is further preferable, and styrene is most preferable. The aromatic vinyl monomers can be used alone or as a combination of two or more thereof.

The aromatic vinyl block constituting the block copolymer is not necessarily made only from aromatic vinyl monomers. Therefore, the aromatic vinyl block may include a conjugated diene monomer in the part, for example.

### (3) Conjugated diene monomer

As examples of the conjugated diene monomer constituting the block copolymer which is the copolymer before hydrogenation of the hydrogenated aromatic vinyl copolymer of the present embodiment, 1,3-butadiene; isoprene; 2,3-dimethyl-1,3-butadiene; 1,3-pentadiene; 2-methyl-1,3-pentadiene; 1,3-hexadiene, and 4,5-diethyl-1,3-octadiene can be given. Among these, in order to obtain a hydrogenated aromatic vinyl copolymer that can be industrially utilized and that has excellent properties, 1,3-butadiene; isoprene; or 1,3-pentadiene is preferable, 1,3-butadiene or isoprene is further preferable, and 1,3-butadiene is most preferable. The conjugated diene monomers can be used alone or as a combination of two or more thereof.

### (4) Coupling agent

As examples of the coupling agent that can be used to obtain the block copolymer which is the copolymer before hydrogenation of the hydrogenated aromatic vinyl copolymer of the present embodiment, methyldichlorosilane; trichlorosilane, methyltrichlorosilane; tetrachlorosilane; tetramethoxysilane; tetrachlorogermanium; tetrachlorotin; butyltrichlorotin; butyltrichlorosilane; dimethylchlorosilane; 1,4-chloromethylbenzene; and bis(trichlorosilyl)ethane can be given.

### (5) Degree of hydrogenation

97% or more, preferably 98% or more, and further preferably 99% or more of the aromatic rings derived from the aromatic vinyl monomer and the double bonds derived from the conjugated diene monomer of the block copolymer of the hydrogenated aromatic vinyl copolymer of the present embodiment are hydrogenated. In other words, the degree of hydrogenation of the hydrogenated aromatic vinyl copolymer of the present embodiment, including nuclear hydrogenation, is 97% or more. When the degree of hydrogenation is below 97%, the total light transmittance decreases and it is difficult to ensure sufficient transparency as a material for optical parts.

As the hydrogenation catalyst used for the hydrogenation, a solid catalyst or a liquid catalyst can be given, for example. As specific examples of the solid catalyst, fine particles of noble metals such as ruthenium, rhodium, palladium, platinum, and nickel, and catalysts containing these noble metals supported on a carrier such as activated carbon, silica, or alumina can be given. As specific examples of the liquid catalyst, a catalyst prepared by reducing a complex, which comprises a transition metal element such as chromium or cobalt dissolved in an organic solvent, with an alkyl metal compound, and the like can be given.

The hydrogenated aromatic vinyl copolymer of the present embodiment is produced by hydrogenating the block copolymer in the hydrogenation process under specified conditions. The hydrogenation process preferably comprises a first hydrogenation step mainly to hydrogenate the double bonds originating from the conjugated diene monomer, and a second hydrogenation step mainly to hydrogenate the aromatic rings originating from the aromatic vinyl monomer, which follows the first hydrogenation step. In this manner, the hydrogenated aromatic vinyl copolymer with a desired weight average molecular weight can be obtained by hydrogenating in two or more steps, each carried out under conditions differing from the other, while avoiding the occurrence of undesired phenomena such as gel formation.

The first hydrogenation step is preferably carried out under the conditions of a reaction temperature of 130 to 150°C, a hydrogen pressure of 3 to 7 MPa, and a reaction time of 1 to 5 hours, and further preferably at a temperature of 135 to 145°C and a pressure of 4 to 6 MPa for 1 to 3 hours. The second hydrogenation step is preferably carried out under the conditions of a reaction temperature of 200 to 250°C, a hydrogen pressure of 9 to 15 MPa, and a reaction time of 1 to 24 hours, and further preferably at a temperature of 210 to 240°C and a pressure of 10 to 14 MPa for 2 to 10 hours. The hydrogen pressure here is expressed by a gauge pressure.

Any solvent which can dissolve the hydrogenated aromatic vinyl copolymer and does not act as a catalyst poison can be used for producing the hydrogenated aromatic vinyl copolymer of the present embodiment. As specific examples of such a solvent, cycloalkanes such as cyclohexane, methyl cyclohexane, and dimethyl cyclohexane and alkanes such as n-hexane can be given. In order to adjust the hydrogenation conditions, a small amount of a polar compound such as an alcohol, an ether, or a ketone can be added to the solvent.

It is preferable to remove the hydrogenation catalyst from the reaction solution after the hydrogenation reaction. When the hydrogenation catalyst is solid, the catalyst can be removed by filtration and the like. On the other hand, when the hydrogenation catalyst is liquid, the catalyst can be removed by a method of washing with water after the addition of a chelating agent or the like. The hydrogenated aromatic vinyl copolymer of the present embodiment can be obtained by removing the solvent from the reaction solution, which obtained by removing the hydrogenation catalyst, by a method such as stripping or reprecipitation, and drying.

The glass transition temperature (Tg) of the hydrogenated aromatic vinyl copolymer of the present embodiment is preferably 135°C or more, further preferably 137°C or more, and particularly preferably 140°C or more. When the glass transition temperature (Tg) is below 135°C, the heat resistance tends to be inferior. In addition, the glass transition temperature (Tg) (°C) in the present specification indicates a value measured and calculated by DSC.

The weight average molecular weight of the hydrogenated aromatic vinyl copolymer of the present embodiment is preferably 50,000 or more, further preferably 60,000 or more, and particularly preferably 70,000 or more. When the weight average molecular weight is below 50,000, the impact resistance may be inferior. In addition, the weight average molecular weight (Mw) in the present specification indicates a polystyrene-reduced weight average molecular weight measured using gel permeation chromatography (GPC).

The hydrogenated aromatic vinyl copolymer of the present embodiment has a light transmittance of a 750 nm light at a thickness of 25 mm of preferably 88% or more, further preferably 90% or more, and particularly preferably 91 % or more. When the light transmittance is below 88%, transparency may not be sufficient as a resin material for constituting optical parts. The light transmittance (%) used in the present specification is a value measured using a 750 nm light at 25°C through a molded sheet with a thickness of 25 mm made from the hydrogenated aromatic vinyl copolymer.

The hydrogenated aromatic vinyl copolymer of the present embodiment may contain other components to the extent that the various excellent characteristics such as excellent transparency, excellent impact resistance, and low water absorption are not adversely affected. As examples of the other components, stabilizer such as aging preventive, weathering agent, metal deactivator, light stabilizer, ultraviolet absorber, and heat stabilizer, antimicrobial and antifungal agent, dispersing agent, plasticizer, crosslinking agent, co-crosslinking agent, vulcanizing agent, vulcanizing aid, foaming agent, and foaming aid can be given.

2. Molded article One embodiment of a molded article of the present invention is obtained by molding any one of the hydrogenated aromatic vinyl copolymers described above. That is, the molded article of the present embodiment is obtained by molding the above-described hydrogenated aromatic vinyl copolymer having various properties such as excellent transparency, excellent impact resistance, low water absorption, and a small birefringence index. Accordingly, the molded article of the present embodiment has excellent transparency, excellent impact resistance, low water absorption, and a small birefringence index, and is thus suitable as optical parts.

Optical lenses, transparent films, and the like can be given as specific examples of the molded articles of the present embodiment. More specific examples include lenses for camera-equipped cellular phones, pick-up lenses, polygon mirrors for laser printers, and optical disk substrates.

### EXAMPLES

The present invention is described below in detail by way of examples. Note that the present invention is not limited to the following examples. In the examples, "part(s)" means "part(s) by mass" and "%" means "% by mass" unless otherwise indicated. The methods used for measuring and evaluating various properties were as follows.

<Styrene content> Measured and calculated by infrared absorption spectrometry.

<Vinyl bond (1,2-bond) content> Calculated by Hampton method using infrared absorption spectrometry.

<Weight average molecular weight (Mw)> A polystyrene-reduced value was determined using gel permeation chromatography (GPC, column: "GMH_{HR}-H" manufactured by Tosoh Corp.).

<n (high molecular side peak top molecular weight/low molecular side peak top molecular weight)> A polystyrene-reduced value was determined using gel permeation chromatography (GPC, column: "GMH_{HR}-H" manufactured by Tosoh Corp.). "n" is the same as the "n" defined in the above formulas (1) and (2).

<Degree of hydrogenation> Measured and calculated by ¹H-NMR spectrometry.

<Glass transition temperature (Tg)> Measured and calculated by DSC ("DSC2920" manufactured by TA Instruments Inc.).

<Light transmittance> Measured using a 750 nm light at 25°C through a molded sheet with a thickness of 25 mm using a visible-ultraviolet spectrophotometer ("haze-gard plus" manufactured by BYK-Gardner GmbH).

<Water absorption> Measured and calculated according to JIS K 7105 (measuring method A), in which a molded sheet with a thickness of 25 mm cut into a square (10 mm × 10 mm) was immersed in distilled water for 24 hours.

<Izod impact strength> Measured according to ASTM D256 using a notched test specimen.

<Photoelastic coefficient (× 10⁻¹²Pa⁻¹)> A stress (Pa) and a refractive index were measured by stretching a molded sheet with a thickness of2.5 mm, which was dried at 100°C under vacuum for 20 hours, using a tension tester at a temperature 5°C higher than the glass transition temperature (Tg) of the material from which the sheet is formed. In addition, the refractive index was measured at a wavelength of 589.3 nm using a refractive index meter ("KOBRA-21 ADH" manufactured by Oji Scientific Instruments). The refractive index difference (Δn) was plotted along the vertical axis and the stress (Pa) was plotted along the horizontal axis to determine the photoelastic coefficient (× 10⁻¹²Pa⁻¹) from the slope of the line.

### (Synthesis Example 1)

A 50-liter reaction vessel of which the internal atmosphere was replaced with nitrogen was charged with 25 kg of cyclohexane, 1 g of tetrahydrofuran, 4,000 g of styrene, and 4.1 g of n-butyllithium. The monomers were polymerized under adiabatic conditions starting from a temperature of 70°C. After the polymerization reaction completed, the temperature was set to 35°C and 1,000 g of 1,3-butadiene was added to continue the adiabatic polymerization. After 30 minutes, 2.7 g oftetrachlorosilane was added to effect a coupling reaction for 15 minutes. Then, 100 ml of methanol was added to terminate the coupling reaction. The reaction solution was steam-stripped and the resulting product was dried at 120°C using a roller to obtain a block copolymer A. The obtained block copolymer A had a styrene content of 80%, a vinyl bond content of 15%, a weight average molecular weight of 161,000, and a value of "n" of 3.1.

### (Synthesis Example 2)

A 50-liter reaction vessel of which the internal atmosphere was replaced with nitrogen was charged with 25 kg of cyclohexane, 1 g of tetrahydrofuran, 4,100 g of styrene, and 3.9 g of n-butyllithium. The monomers were polymerized under adiabatic conditions starting from a temperature of 70°C. After the polymerization reaction completed, the temperature was set to 35°C and 900 g of 1,3-butadiene was added to continue the adiabatic polymerization. After 30 minutes, 2.6 g of tetrachlorosilane was added to effect a coupling reaction for 15 minutes. Then, 100 ml of methanol was added to terminate the coupling reaction. The reaction solution was steam-stripped and the resulting product was dried at 120°C using a roller to obtain a block copolymer B. A styrene content, a vinyl bond content, a weight average molecular weight (Mw), and a value of "n" of the obtained block copolymer B are shown in Table 1.

### (Synthesis Example 3)

A 50-liter reaction vessel of which the internal atmosphere was replaced with nitrogen was charged with 25 kg of cyclohexane, 1 g of tetrahydrofuran, 4,400 g of styrene, and 3.9 g of n-butyllithium. The monomers were polymerized under adiabatic conditions starting from a temperature of 70°C. After the polymerization reaction completed, the temperature was set to 35°C and 600 g of 1,3-butadiene was added to continue the adiabatic polymerization. After 30 minutes, 2.6 g of tetrachlorosilane was added to effect a coupling reaction for 15 minutes. Then, 100 ml of methanol was added to terminate the coupling reaction. The reaction solution was steam-stripped and the resulting product was dried at 120°C using a roller to obtain a block copolymer C. A styrene content, a vinyl bond content, a weight average molecular weight (Mw), and a value of "n" of the obtained block copolymer C are shown in Table 1.

### (Synthesis Example 4)

A 50-liter reaction vessel of which the internal atmosphere was replaced with nitrogen was charged with 25 kg of cyclohexane, 1 g of tetrahydrofuran, 3,400 g of styrene, and 3.9 g of n-butyllithium. The monomers were polymerized under adiabatic conditions starting from a temperature of 70°C. After the polymerization reaction completed, the temperature was set to 35°C and 1,600 g of 1,3-butadiene was added to continue the adiabatic polymerization. After 30 minutes, 2.6 g of tetrachlorosilane was added to effect a coupling reaction for 15 minutes. Then, 100 ml of methanol was added to terminate the coupling reaction. The reaction solution was steam-stripped and the resulting product was dried at 120°C using a roller to obtain a block copolymer D. A styrene content, a vinyl bond content, a weight average molecular weight (Mw), and a value of "n" of the obtained block copolymer D are shown in Table 1.

### (Synthesis Example 5)

A 50-liter reaction vessel of which the internal atmosphere was replaced with nitrogen was charged with 25 kg of cyclohexane, 1 g of tetrahydrofuran, 4,600 g of styrene, and 4.1 g of n-butyllithium. The monomers were polymerized under adiabatic conditions starting from a temperature of 70°C. After the polymerization reaction completed, the temperature was set to 35°C and 400 g of 1,3-butadiene was added to continue the adiabatic polymerization. After 30 minutes, 2.7 g of tetrachlorosilane was added to effect a coupling reaction for 15 minutes. Then, 100 ml of methanol was added to terminate the coupling reaction. The reaction solution was steam-stripped and the resulting product was dried at 120°C using a roller to obtain a block copolymer E. A styrene content, a vinyl bond content, a weight average molecular weight (Mw), and a value of "n" of the obtained block copolymer E are shown in Table 1.

### (Synthesis Example 6)

A 50-liter reaction vessel of which the internal atmosphere was replaced with nitrogen was charged with 25 kg of cyclohexane, 1 g of tetrahydrofuran, 4,000 g of styrene, and 7.8 g of n-butyllithium. The monomers were polymerized under adiabatic conditions starting from a temperature of 70°C. After the polymerization reaction completed, the temperature was set to 35°C and 1,000 g of 1,3-butadiene was added to continue the adiabatic polymerization. After 30 minutes, 5.2 g of tetrachlorosilane was added to effect a coupling reaction for 15 minutes. Then, 100 ml of methanol was added to terminate the coupling reaction. The reaction solution was steam-stripped and the resulting product was dried at 120°C using a roller to obtain a block copolymer F. A styrene content, a vinyl bond content, a weight average molecular weight (Mw), and a value of "n" of the obtained block copolymer F are shown in Table 1.

**TABLE 1**

| Block copolymer (copolymer before hydrogenation) | Styrene content (% by mass) | Vinyl bond content (%) | Weight average molecular weight | n |
|---|---|---|---|---|
| A | 80 | 15 | 161,000 | 3.1 |
| B | 82 | 13 | 155,000 | 3.2 |
| C | 88 | 20 | 138,000 | 3.1 |
| D | 68 | 16 | 170,000 | 3.3 |
| E | 93 | 16 | 148,000 | 3.2 |
| F | 80 | 13 | 70,000 | 3.3 |

### (Example 1)

A 5-liter high-pressure reaction vessel of which the internal atmosphere was replaced with nitrogen was charged with 2,000 g of cyclohexane and 500 g of the block copolymer A. The mixture was stirred at room temperature for eight hours to dissolve the block copolymer A. After the addition of 25 g of a nickel catalyst supported on a carrier ("N103" manufactured by Nikki Chemical Co., Ltd.), the internal atmosphere of the reaction vessel was replaced with nitrogen. After adjusting the hydrogen pressure to 1 MPa (gauge pressure), the mixture was heated to 140°C while stirring, whereupon the hydrogen pressure was increased to 5 MPa, followed by stirring for three hours. The mixture was further heated to 230°C while stirring, whereupon the hydrogen pressure was increased to 10 MPa, followed by stirring for five hours. After cooling the high-pressure reaction vessel to room-temperature, the reaction solution was filtered through a 1 micrometer millipore filter. The filtrate was coagulated by methanol and dried under vacuum to obtain a hydrogenated aromatic vinyl copolymer of Example 1. The obtained hydrogenated aromatic vinyl copolymer (Example 1) had a degree of hydrogenation of 99.5%, a weight average molecular weight (Mw) of 75,000, a glass transition temperature (Tg) of 138°C, a light transmittance of 90%, a water absorption of 0.02%, an Izod impact strength of 65 J/m, and a photoelastic coefficient of-250 × 10⁻¹²Pa⁻¹.

### (Example 2)

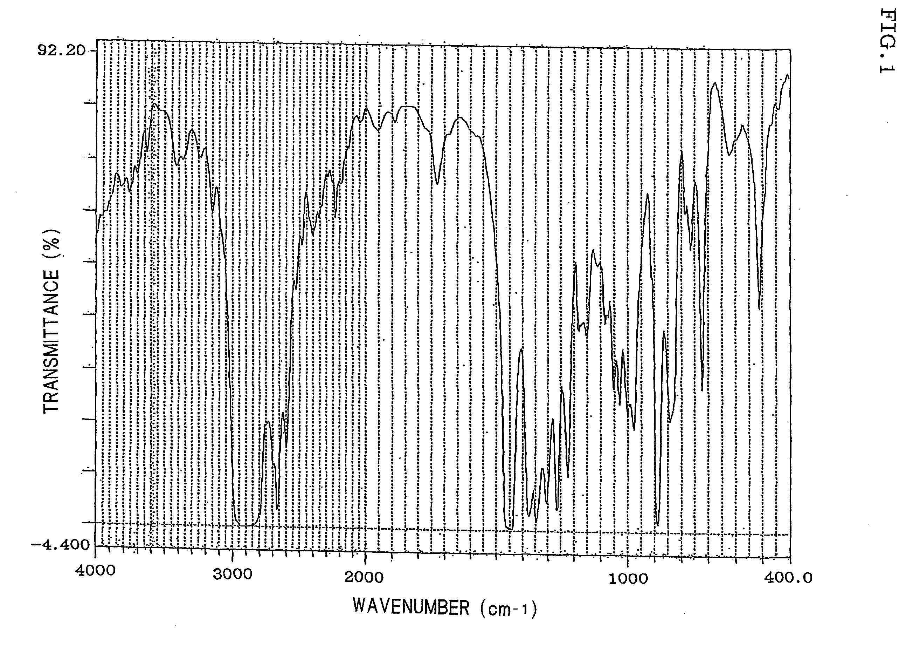

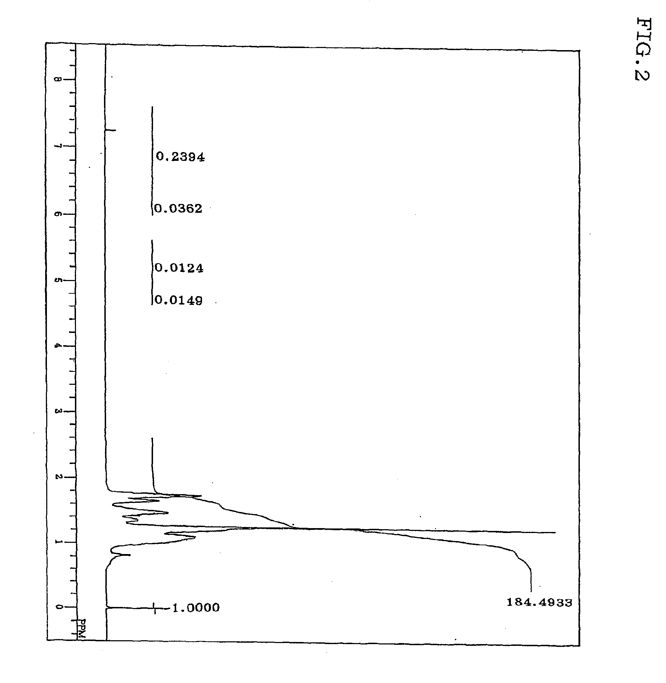

A 5-liter high-pressure reaction vessel of which the internal atmosphere was replaced with nitrogen was charged with 2,000 g of cyclohexane and 500 g of the block copolymer B. The mixture was stirred at room temperature for eight hours to dissolve the block copolymer B. After the addition of 25 g of a nickel catalyst supported on a carrier ("N103" manufactured by Nikki Chemical Co., Ltd.), the internal atmosphere of the reaction vessel was replaced with nitrogen. After adjusting the hydrogen pressure to 1 MPa, the mixture was heated to 140°C while stirring, whereupon the hydrogen pressure was increased to 5 MPa, followed by stirring for three hours. The mixture was further heated to 230°C while stirring, whereupon the hydrogen pressure was increased to 10 MPa, followed by stirring for five hours. After cooling the high-temperature reaction vessel to room-temperature, the reaction solution was filtered through a 1 micrometer millipore filter. The filtrate was coagulated by methanol and dried under vacuum to obtain a hydrogenated aromatic vinyl copolymer of Example 2. The physical properties of the obtained hydrogenated aromatic vinyl copolymer (Example 2) are shown in Table 2. The infrared absorption spectrum and the ¹H-NMR chart of the hydrogenated aromatic vinyl copolymer obtained in Example 2 are shown in Figures 1 and 2 respectively.

### (Example 3)

A 5-liter high-pressure reaction vessel of which the internal atmosphere was replaced with nitrogen was charged with 2,000 g of cyclohexane and 500 g of the block copolymer C. The mixture was stirred at room temperature for eight hours to dissolve the block copolymer B. After the addition of 25 g of a nickel catalyst supported on a carrier ("N103" manufactured by Nikki Chemical Co., Ltd.), the internal atmosphere of the reaction vessel was replaced with nitrogen. After adjusting the hydrogen pressure to 1 MPa, the mixture was heated to 140°C while stirring, whereupon the hydrogen pressure was increased to 5 MPa, followed by stirring for three hours. The mixture was further heated to 230°C while stirring, whereupon the hydrogen pressure was increased to 10 MPa, followed by stirring for five hours. After cooling the high-temperature reaction vessel to room-temperature, the reaction solution was filtered through a 1 micrometer millipore filter. The filtrate was coagulated by methanol and dried under vacuum to obtain a hydrogenated aromatic vinyl copolymer of Example 3. The physical properties of the obtained hydrogenated aromatic vinyl copolymer (Example 3) are shown in Table 2.

### (Comparative Example 1)

A 5-liter high-pressure reaction vessel of which the internal atmosphere was replaced with nitrogen was charged with 2,000 g of cyclohexane and 500 g of the block copolymer D. The mixture was stirred at room temperature for eight hours to dissolve the block copolymer C. After the addition of 25 g of a nickel catalyst supported on a carrier ("N103" manufactured by Nikki Chemical Co., Ltd.), the internal atmosphere of the reaction vessel was replaced with nitrogen. After adjusting the hydrogen pressure to 1 MPa, the mixture was heated to 140°C while stirring, whereupon the hydrogen pressure was increased to 5 MPa, followed by stirring for three hours. The mixture was further heated to 230°C while stirring, whereupon the hydrogen pressure was increased to 10 MPa, followed by stirring for five hours. After cooling the high-temperature reaction vessel to room-temperature, the reaction solution was filtered through a 1 micrometer millipore filter. The filtrate was coagulated by methanol and dried under vacuum to obtain a hydrogenated aromatic vinyl copolymer of Comparative Example 1. The physical properties of the obtained hydrogenated aromatic vinyl copolymer (Comparative Example 1) are shown in Table 2.

### (Comparative Example 2)

A 5-liter high-pressure reaction vessel of which the internal atmosphere was replaced with nitrogen was charged with 2,000 g of cyclohexane and 500 g of the block copolymer E. The mixture was stirred at room temperature for eight hours to dissolve the block copolymer E. After the addition of 25 g of a nickel catalyst supported on a carrier ("N103" manufactured by Nikki Chemical Co., Ltd.), the internal atmosphere of the reaction vessel was replaced with nitrogen. After adjusting the hydrogen pressure to 1 MPa, the mixture was heated to 140°C while stirring, whereupon the hydrogen pressure was increased to 5 MPa, followed by stirring for three hours. The mixture was further heated to 230°C while stirring, whereupon the hydrogen pressure was increased to 10 MPa, followed by stirring for five hours. After cooling the high-temperature reaction vessel to room-temperature, the reaction solution was filtered through a 1 micrometer millipore filter. The filtrate was coagulated by methanol and dried under vacuum to obtain a hydrogenated aromatic vinyl copolymer of Comparative Example 2. The physical properties of the obtained hydrogenated aromatic vinyl copolymer (Comparative Example 2) are shown in Table 2.

### (Comparative Example 3)

A 5-liter high-pressure reaction vessel of which the internal atmosphere was replaced with nitrogen was charged with 2,000 g of cyclohexane and 500 g of the block copolymer F. The mixture was stirred at room temperature for eight hours to dissolve the block copolymer F. After the addition of 25 g of a nickel catalyst supported on a carrier ("N103" manufactured by Nikki Chemical Co., Ltd.), the internal atmosphere of the reaction vessel was replaced with nitrogen. After adjusting the hydrogen pressure to 1 MPa, the mixture was heated to 140°C while stirring, whereupon the hydrogen pressure was increased to 5 MPa, followed by stirring for three hours. The mixture was further heated to 230°C while stirring, whereupon the hydrogen pressure was increased to 10 MPa, followed by stirring for five hours. After cooling the high-temperature reaction vessel to room-temperature, the reaction solution was filtered through a 1 micrometer millipore filter. The filtrate was coagulated by methanol and dried under vacuum to obtain a hydrogenated aromatic vinyl copolymer of Comparative Example 3. The physical properties of the obtained hydrogenated aromatic vinyl copolymer (Comparative Example 3) are shown in Table 2.

### (Comparative Example 4)

A 5-liter high-pressure reaction vessel of which the internal atmosphere was replaced with nitrogen was charged with 2,000 g of cyclohexane and 500 g of the block copolymer A. The mixture was stirred at room temperature for eight hours to dissolve the block copolymer A. After the addition of 25 g of a nickel catalyst supported on a carrier ("N163" manufactured by Nikki Chemical Co., Ltd.), the internal atmosphere of the reaction vessel was replaced with nitrogen. After adjusting the hydrogen pressure to 1 MPa, the mixture was heated to 140°C while stirring, whereupon the hydrogen pressure was increased to 5 MPa, followed by stirring for three hours. The mixture was further heated to 230°C while stirring, whereupon the hydrogen pressure was increased to 10 MPa, followed by stirring for five hours. After cooling the high-pressure reaction vessel to room-temperature, the reaction solution was filtered through a 1 micrometer millipore filter. The filtrate was coagulated by methanol and dried under vacuum to obtain a hydrogenated aromatic vinyl copolymer of Comparative Example 4. The physical properties of the obtained hydrogenated aromatic vinyl copolymer (Comparative Example 4) are shown in Table 2.

**TABLE 2**

| | Example | | | Comparative Example | | | |
|---|---|---|---|---|---|---|---|
| | 1 | 2 | 3 | 1 | 2 | 3 | 4 |
| Block copolymer (copolymer before hydrogenation) | A | B | C | D | E | F | A |
| Degree of hydrogenation (%) | 99.5 | 99.7 | 99.6 | 99.5 | 99.2 | 99.3 | 90.5 |
| Weight average molecular weight | 75,000 | 73,000 | 69,000 | 81,000 | 72,000 | 46,000 | 81,000 |
| Glass transition temperature (°C) | 138 | 141 | 142 | 115 | 142 | 135 | 126 |
| Light transmittance (%) | 90 | 91 | 92 | 86 | 91 | 92 | 87 |
| Water absorption (%) | 0.02 | 0.03 | 0.03 | 0.02 | 0.02 | 0.03 | 0.03 |
| Izod impact strength (J/m) | 65 | 85 | 60 | 100 | 15 | 20 | 40 |
| Photoelastic coefficient (× 10⁻¹²Pa⁻¹) | -250 | -240 | -120 | - | - | - | - |

As shown in Table 2, it is clear that the molded sheets made from the hydrogenated aromatic vinyl copolymers of Examples 1 to 3 had a light transmittance of a 750 nm light at 25°C of 90% or more, demonstrating their excellent transparency. In addition, it can be understood that the molded sheets made from the hydrogenated aromatic vinyl copolymers of Examples 1 to 3 had a water absorption of 0.05 % or less, indicating their sufficiently low water absorption. Furthermore, it can be understood that the molded sheets made from the hydrogenated aromatic vinyl copolymers of Examples 1 to 3 had an Izod impact strength higher than the molded sheets made from the hydrogenated aromatic vinyl copolymers of Comparative Examples 2 to 4, showing their excellent impact resistance. The molded sheet made from the hydrogenated aromatic vinyl copolymer of Comparative Example 1 exhibited high Izod impact strength, but low light transmittance.

The molded sheets made from the hydrogenated aromatic vinyl copolymers of Examples 1 to 3 had an absolute value of the photoelastic coefficient (× 10⁻¹²Pa⁻¹) within 300, clearly showing their small birefringence index and optical anisotropy.

### INDUSTRIAL APPLICABILITY

The hydrogenated aromatic vinyl copolymer of the present invention is a resin material having excellent transparency, excellent impact resistance, low water absorption, and a small birefringence index. Therefore, the copolymer is suitable as a material for forming optical lenses, transparent films, and the like. More particularly, the copolymer is suitable as a material for forming lenses for camera-equipped cellular phones, pick-up lenses, polygon mirrors for laser printers, and optical disk substrates.

## Claims

1. A hydrogenated aromatic vinyl copolymer obtained by hydrogenating a block copolymer comprising monomer units including an aromatic vinyl monomer and a conjugated diene monomer, wherein the block copolymer includes (A) 75 to 92% by mass of a constituent unit derived from the aromatic vinyl monomer and (B) 8 to 25% by mass of a constituent unit derived from the conjugated diene monomer (with the proviso that (A) + (B) =100% by mass) and is a branched block copolymer which has a weight average molecular weight of 100,000 to 300,000 and of which the block structure is shown by the following general formula (1) or (2),
(A-B)ₙM (1)
(A-B-A)ₙM (2)
wherein A is the constituent unit derived from the aromatic vinyl monomer, B is the constituent unit derived from the conjugated diene monomer, M is at least one metallic element selected from the group consisting of Si, Sn, and Ge, and n is 2<n<4, and 97% or more of the aromatic rings derived from the aromatic vinyl monomer and the double bonds derived from the conjugated diene monomer are hydrogenated.

2. The hydrogenated aromatic vinyl copolymer according to claim 1, wherein the hydrogenated aromatic vinyl copolymer is hydrogenated by a hydrogenation process comprising a first hydrogenation step carried out under the conditions of a reaction temperature of 130 to 150°C, a hydrogen pressure of 3 to 7 MPa, and a reaction time of 1 to 5 hours and a second hydrogenation step carried out under the conditions of a reaction temperature of 200 to 250°C, a hydrogen pressure of 9 to 15 MPa, and a reaction time of 1 to 24 hours.

3. The hydrogenated aromatic vinyl copolymer according to claim 1 or 2, wherein the hydrogenated aromatic vinyl copolymer has a glass transition temperature of 135°C or more, a weight average molecular weight of 50,000 or more, and a light transmittance of 750 nm light at a thickness of 25 mm of 88% or more.

4. The hydrogenated aromatic vinyl copolymer according to any one of claims 1 to 3, wherein n in the general formulas (1) and (2) is 2.3≤n≤3.7.

5. The hydrogenated aromatic vinyl copolymer according to any one of claims 1 to 4, wherein the aromatic vinyl monomer is styrene.

6. The hydrogenated aromatic vinyl copolymer according to any one of claims 1 to 5, wherein the conjugated diene monomer is 1,3-butadiene.

7. A molded article produced by molding the hydrogenated aromatic vinyl copolymer according to any one of claims 1 to 6.
